# EUROPÄISCHE PATENTANMELDUNG

(11) **EP 1 391 674 A1**
(43) Veröffentlichungstag der Anmeldung: **25.02.2004**
(21) Anmeldenummer: 03000382.6
(22) Anmeldetag: 10.01.2003
(51) Int. Cl.: F28F 1/02, F24D 3/14

(54) **Wärmetauscherprofil**

(30) Priorität: 21.08.2002 DE 10238086
(71) Anmelder: gabo Systemtechnik GmbH, 94559 Niederwinkling (DE)
(72) Erfinder: Bauer, Peter, 94357 Konzell (DE); Buchner, Peter, 94327 Bogen (DE); Wöhrl, Helmut, 94327 Bogen (DE)

(57) **Zusammenfassung**

Die Erfindung bezieht sich auf ein Wärmetauscherprofil, insbesondere für Kühl- und Heizdecken, bzw. -Wände mit Rohren bzw. Schläuchen vorzugsweise aus Kunststoff, deren Profile (WP) eine Auflagefläche (AF), einen zur Hochachse (Y) symmetrischen Querschnitt, die eine umlaufend etwa gleichbleibende Wanddicke (S), mit einem Umfang (U1) dessen Länge gleich ist einem Umfang (U2) eines Kreises (K) mit einem Radius (RK) aufweisen, wobei etwa senkrecht zur Auflagefläche (AF) zwei etwa gleich lange Seitenflächen (C1,C2) ausgebildet sind, deren Länge (L1,L2) größer ist als die Länge (L3) der Auflagefläche (AF) und die Verbindung der Seitenflächen (C1) und (C2) mit der Auflagefläche (AF) über je ein Bogenstück (B) erfolgt, dessen Radius (RB) nicht kleiner ist als etwa die Hälfte des Radius (RK).

## Beschreibung

Die Erfindung bezieht sich auf ein Wärmetauscherprofil, insbesondere für Kühl- und Heizdecken, bzw. -Wände mit Rohren bzw. Schläuchen vorzugsweise aus Kunststoff, deren Profile (WP) eine Auflagefläche (AF), einen zur Hochachse (Y) symmetrischen Querschnitt, die eine umlaufend etwa gleichbleibende Wanddicke (S), mit einem Umfang (U1) dessen Länge gleich ist einem Umfang (U2) eines Kreises (K) mit einem Radius (RK) aufweisen.

Wärmetauscherprofile für Heiz- und Kühldecken, Fußbodenheizungen usw. sind notorisch bekannt. Sie weisen unterschiedliche Querschnitte und Formen auf, die den jeweiligen Anwendungszwecken angepaßt sind.

So sind beispielsweise Wärmetauscherprofile aus der FR-PS 913.320 bekannt geworden, die mindestens auf einer Seite abgeflacht sind und mit dieser Seite auf einer Fläche anliegen.

Die DE-OS 27 03 672 zeigt einen flächenhaften, wickelbaren Wärmetauscher aus von einem Fluid durchströmten Kanälen der insgesamt auch mindestens eine flache Oberfläche besitzt, wobei die Kanäle durch Wellrohre gebildet sind.

Das DE-GM G 92 15 163.9 offenbart ebenfalls ein einseitig abgeflachtes Rohr, Schlauch oder dergl. zur Anlage an einer Fläche, während aus der

DE OS 44 02 010 A1 ein Rohrsystem mit Rohren hervorgeht, die außen rund oder flächig ausgebildet sind.

Solche Wärmetauscherprofile weisen einen gemeinsamen Nachteil auf. Sie sind nur sehr schwer oder überhaupt nicht mit den üblichen runden Querschnitten von Anschlußrohren, Fittings, Geräten usw. zu verbinden. Ein weiterer Nachteil liegt in der Biegefähikeit solcher Profile. Liegt das Wärmetauscherprofil nämlich flächig auf einer Platte oder sonstigen Auflagefläche auf, so ist die Notwendigkeit der Biegung eines solchen Profiles senkrecht zur Auflagefläche mit erheblichen Problemen, wie z.B. dessen Verdrehen behaftet, so daß die erforderliche plane Auflage des Profils zur Heiz- und/oder Kühlfläche nicht erreichbar ist. Runde Rohrprofile weisen dagegen den Nachteil auf, daß sie nur linienförmigen Kontakt mit der vorgesehenen Auflagefläche haben können, was dem Wärmeaustausch nicht förderlich ist.

Der Erfindung, wie sie in den Ansprüchen beschrieben ist, liegt daher die Aufgabe zugrunde, die Nachteile der Wärmetauscherprofile gem. dem StdT zu vermeiden und ein Wärmetauscherprofil zu schaffen, das eine flächige Auflage auf einer Heiz- und/oder Kühloberfläche ermöglicht bei gleichzeitiger Vorgabe einer vorzugsweisen Biegerichtung desselben.

Die mit der Erfindung erzielten Vorteile liegen insbesondere in der satten Auflage des Wärmetauscherprofils auf einer Unterlage, wie z.B. einer Platte oder dergl. auch unter erhöhtem Betriebsdruck, ohne sich bei der Verlegung zu Verdrehen, sowie der uneingeschränkten Anschlußmöglichkeit an handelsübliche Fittings, Verschraubungen usw. für runde Rohre.

Die Erfindung ist nachstehend anhand der in den Abbildungen dargestellten Ausführungsbeispiele näher erläutert.

Es zeigt:
Fig. 1 ein Wärmetauscherprofil im Schnitt,
Fig. 2 eine Ausführungsvariante der Fig. 1 und
Fig. 3 eine weitere Ausführungsvariante.

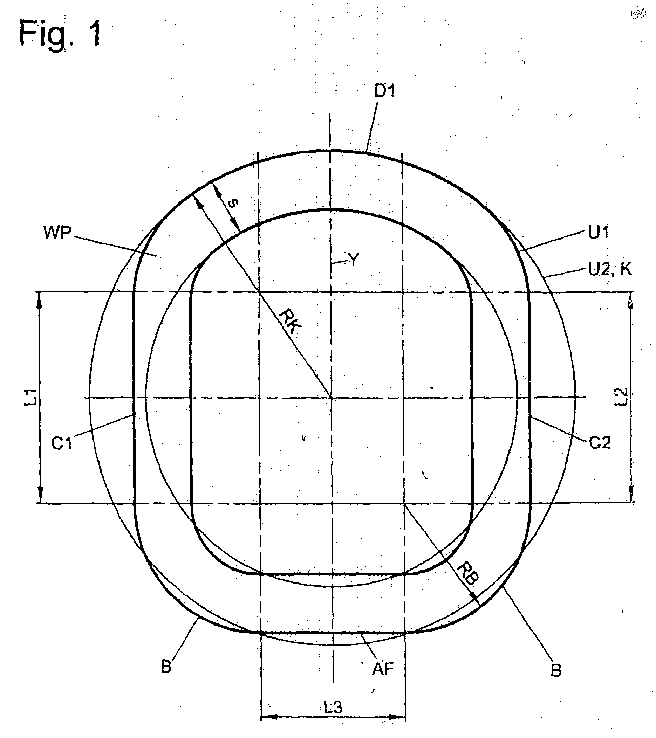

Das Wärmetauscherprofil WP mit symmetrischem Querschnitt Y und etwa gleichbleibender Wanddicke S und einem Umfang U1 dessen Länge gleich dem Umfang U2 eines Kreises K mit dem Radius RK ist, wie in Fig. 1 dargestellt, weist eine Auflagefläche AF auf, die beidseitig mittels eines Bogens B mit je einer Seitenfläche C1 und C2 verbunden ist, deren Längen jeweils länger als die der Auflagefläche AF bemessen sind. Der Radius RB des Bogens B ist nicht kleiner als etwa die Hälfte des Radius' RK des Kreises K. Die der Auflagefläche AF gegenüberliegende Seite D1 ist als bogenförmige Verbindung zwischen den beiden Seiten C1 und C2 ausgebildet, wobei dessen Radius etwa dem Radius RK des Kreises K entspricht. Die geraden Abschnitte der Seitenflächen C1 und C2 besitzen je eine Länge L1 bzw. L2, während die Länge der Auflagefläche AF mit L3 bezeichnet ist.

Damit wird erreicht, daß die Biegerichtung des Wärmetauscherprofiles durch die größere Länge C1,C2 der Seitenflächen gegenüber der Auflagefläche AF und dem damit verbundenen kleineren Widerstandsmoment des Profils um dessen Hochachse dabei zu keinerlei Verdrehen des Profiles führt. Das Wärmetauscherprofil liegt somit stets an einer Kontaktfläche oder dergl. an und gewährleistet einen optimalen Wärmeaustausch.

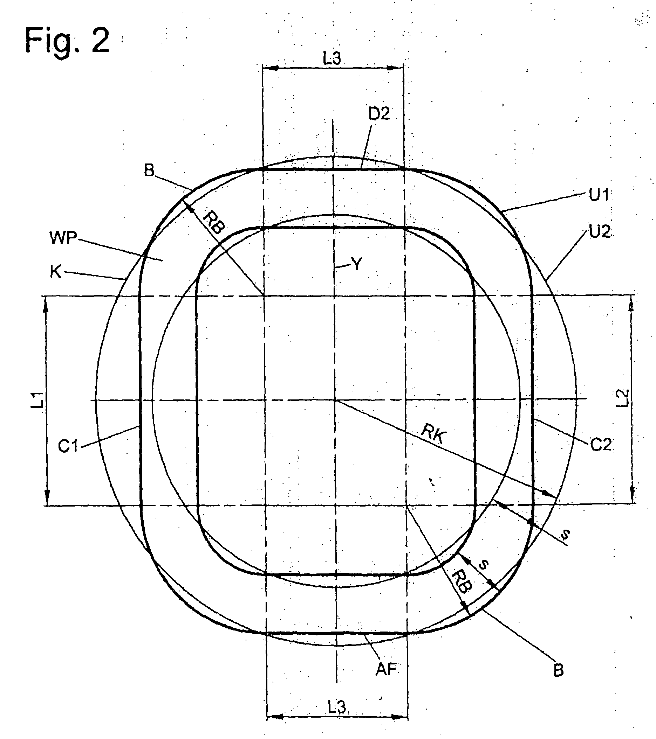

Bei der in der Fig. 2 dargestellten Ausführungsvariante ist die der Auflagefläche AF gegenüberliegende Seite D2 parallel zu ersterer ausgebildet und weist etwa die gleiche Abmessung L3 auf, wobei die Verbindung zwischen den Seitenflächen C1 bzw. C2 zu der Seite D2 bzw. der Auflagefläche RF durch die beiden oberen und unteren Bogenstücke B mit einem Radius RB erfolgt, der etwa die Hälfte des Radius RK beträgt. Auch bei dieser Ausführungsvariante ist die Länge L1,L2 der Seitenflächen C1 und C2 größer bemessen, als die Länge L3 der Auflagefläche AF.

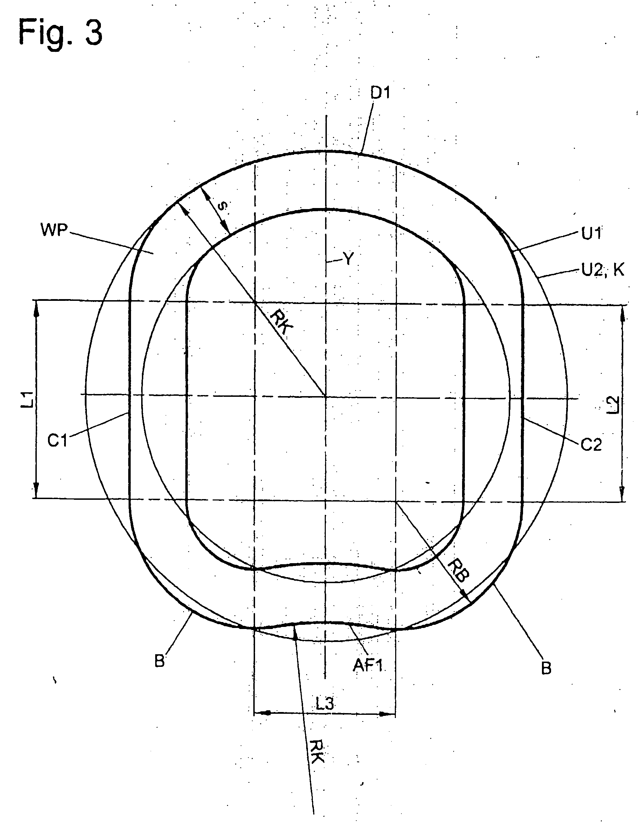

Eine weitere Ausführungsvariante zeigt die Fig. 3, bei der die Auflagefläche AF eine etwas nach innen gewölbte Kontur AF1 besitzt, deren Wölbung einen Radius ≥ RK ist, während die Seitenflächen C1,C2 entweder flach oder, ebenfalls nach innen gewölbt sein können. Mit der Wölbung wird beim Einsatz des Wärmetauscherprofils für Heizzwecke erreicht, daß durch den erhöhten Innendruck und höhere Temperatur gegenüber der Raumluft, die Auflagefläche plan wird und satt auf einer Unterlage, wie z.B. einer, nicht dargestellten, Platte oder dergl. aufliegt. Dieses Phänomen tritt beim Einsatz des Wärmetauscherprofils zum Kühlen nicht auf.

Es hat sich gezeigt, daß die Längen L1,L2 etwa 20 % länger als die Länge L3 ausgebildet, optimale Ergebnisse bringen.

Die Anschlußmöglichkeiten an Fittings, Verschraubungen, Geräteanschlüsse usw., die für runde Rohre des Durchmessers 2 x RK und einer Wanddicke S vorgesehen sind, werden mit dem Wärmetauscherprofil WP voll ausgeschöpft und unterliegen, trotz seiner von einem runden Querschnitt abweichenden Kontur, keinerlei Einschränkungen. Als bevorzugte Werkstoffe für die Herstellung des Wärmetauscherprofiles eignet sich Polybuten sowie sämtliche im Bereich Heizung- und Kühlung vorgesehenen sonstigen Werkstoffe, wie beispielsweise Olefine etc.

### Bezugszeichenliste

- WP: Wärmetauscherprofil
- AF: Auflagefläche
- AF1: Auflagefläche
- Y: Hochachse
- S: Wanddicke von WP und des Kreises K
- U1: Umfang des Wärmetauscherprofils WP
- U2: Umfang des Kreises K
- K: Kreis mit Umfang U2
- RK: Radius des Kreises K
- C1,C2: Seitenflächen des Wärmetauscherprofiles WP
- L1,L2: Längen der Seitenflächen C1,C2
- L3: Länge der Auflagefläche AF
- B: Bogenstück
- RB: Radius des Bogenstückes B
- D1: Bogenform des der Auflagefläche AF gegenüberliegenden Seite
- D2: Seite parallel zur Auflagefläche AF

## Patentansprüche

1. Wärmetauscherprofil (WP) für Kühl- und Heizdecken, bzw. -Wände mit Rohren bzw. Schläuchen aus Kunststoff, deren Profile (WP) eine Auflagefläche (AF), einen zur Hochachse (Y) symmetrischen Querschnitt, und eine umlaufend etwa gleichbleibende Wanddicke (S), mit einem Umfang (U1) dessen Länge gleich ist einem Umfang (U2) eines Kreises (K) mit einem Radius (RK) aufweisen, **dadurch gekennzeichnet, daß** etwa senkrecht zu seiner Auflagefläche (AF) zwei etwa gleich lange Seitenflächen (C1,C2) ausgebildet sind, deren Länge (L1,L2) größer ist als die Länge (L3) der Auflagefläche (AF) und die Verbindung der Seitenflächen (C1) und (C2) mit der Auflagefläche (AF) über je ein Bogenstück (B) erfolgt, dessen Radius (RB) nicht kleiner ist als etwa die Hälfte des Radius (RK).

2. Wärmetauscherprofil (WP) nach Anspruch 1, **dadurch gekennzeichnet, daß** dessen der Auflagefläche (AF) gegenüberliegende Seite (D1) bogenförmig ausgebildet ist und einen Radius besitzt, der etwa dem Radius des Kreises (K) entspricht.

3. Wärmetauscherprofil (WP) nach Anspruch 1, **dadurch gekennzeichnet, daß** die der Auflagefläche (AF) gegenüberliegende Seite (D2) parallel zu derselben verlläuft und etwa die Länge (L3) aufweist, wobei die Verbindung zwischen den Seitenflächen (C1) und (C2) und der Seite (D2) bogenförmig mit einem Radius (RB) ausgebildet ist.

4. Wärmetauscherprofil (WP) nach Anspruch 1 bis 3, **dadurch gekennzeichnet, daß** die Auflagefäche (AF) eine nach innen gewölbte Kontur (AF1) aufweist, deren Wölbung einem Radius 2 dem Radius (RK) aufweist.

5. Wärmetauscherprofil (WP) nach Anspruch 1, **dadurch gekennzeichnet, daß** die Seitenflächen C1 und C2 eine nach innen gewölbte Kontur aufweisen.
